# EUROPEAN PATENT SPECIFICATION

(11) **EP 0 870 135 B1**
(45) Date of publication and mention of the grant of the patent: **13.03.2002**
(21) Application number: 96925221.2
(22) Date of filing: 10.07.1996
(51) Int. Cl.: F16J 9/00, F16J 9/22, F02F 3/02

(54) **AN IMPROVED PISTON RING**
KOLBENRING
SEGMENT DE PISTON AMELIORE

(30) Priority: 22.09.1995 SE 9503288
(43) Date of publication of application: 14.10.1998
(73) Proprietor: Koncentra Verkstads AB, 413 04 Göteborg (DE)
(72) Inventor: LOID, Hans, Peder, S-427 50 Billdal (SE); SUNDEN, Hans, S-430 35 Brännö (SE)
(74) Representative: Ferkinghoff, Claes-Göran
(86) International application number: SE9600932
(87) International publication number: WO9711294

(56) References cited:
- EP-A- 0 019 971
- DE-B- 1 909 851
- US-A- 5 083 536

## Description

The invention relates to piston rings fitted on internal combustion engine pistons according to the preamble of claim 1.

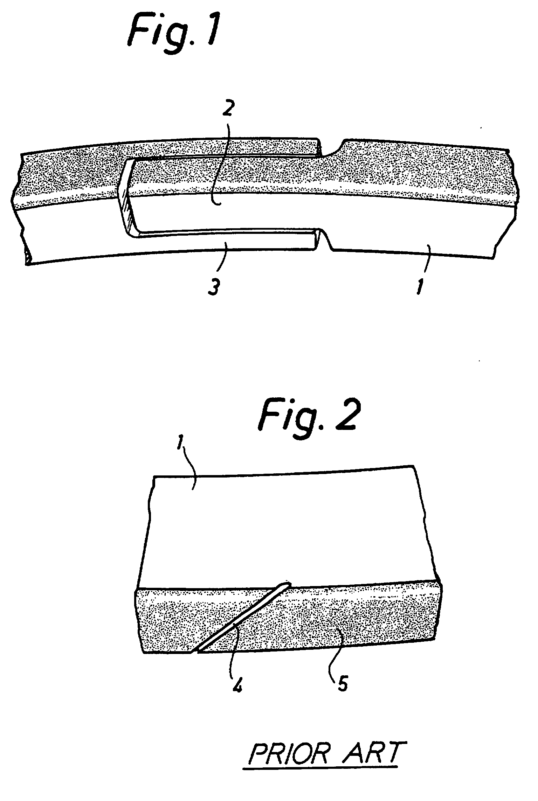

Such piston rings are well known, as shown in figures 1 and 2, and in particular designed as open rings having a slit or gap between the ring ends in order to allow flexing of the ring. Often, the slit extends obliquely. Reduced passage of combustion gases occurs through the slit but such passage-through may reach unacceptable amounts when several piston rings on one and the same piston assume a position wherein all the slits of the rings are aligned.

In order to reduce and possibly to entirely eliminate gas passage through piston rings of this kind the rings may be formed with a gas-sealed joint. However, this arrangement has proved to be disadvantageous in other respects, as will be explained in closer detail below.

In order to remedy deficiencies as may occur in piston rings having a gas-sealed joint an obliquely extending groove has been formed in the ring in the peripheral edge face of the ring, i.e. in its wear face. While operational advantages have been gained the arrangement does, however, suffer from other drawbacks, as will likewise be discussed later on.

The present invention provides a piston ring solving the problems outlined above. The characteristic features of the piston ring appear from the subsequent claims.

Some prior-art designs and the invention will be explained in the following in more detail with reference to the accompanying drawings, wherein
Figs 1 and 2 illustrate parts of a piston ring in accordance with two prior-art designs,
Fig. 3 illustrates a part of a piston ring designed in accordance with the invention, and
Fig. 4 is a vertical sectional view through a part of a piston fitted with a piston ring in accordance with the invention.

Fig. 1 illustrates a piston ring 1 formed with a gas-sealed joint as mentioned above. In this case the piston ring 1 is formed in a prior-art manner with end portions 2,3 configured to be fitted together in overlapping relationship so as to bridge the joint between the ends of the piston ring 1. A disadvantage found in this design is, however, that when a thus configured ring is placed closest to the combustion chamber on a piston fitted with several rings this ring will have to absorb the entire pressure drop and thus the entire load at each explosion stroke, with consequential increase of wear on the ring as well as on the engine cylinder lining.

For the purpose of somewhat removing the load on the piston ring 1 one prior-art solution illustrated in Fig. 2 suggests the provision on the ring 1 of grooves spaced equidistantly around the wear face 5 of the ring 1. In this manner, operational advantages have been obtained, as a consequence of the somewhat reduced load on the ring 1. However, at the same time the solution has caused the appearance of other disadvantages. The grooves 4 act as serious crack initiation means through the entire ring 1. In addition, in the case of surface-coated rings having a hard and brittle spray-coated plasma wear layer 5 damages easily occur in the form of scaling of the wear layer 5 during the formation of the grooves 4 as well as during operation. The risks that fractures should occur are the largest one when the grooves 4 are straight, i.e. grooves 4 extending perpendicularly from the top face to the bottom face of the ring 1. When the grooves 4 have an oblique extension the maximum risk of scaling exists at the top and bottom ends of the groove 4. Scaling is a serious disadvantage in the ring 1 but obviously it also is a serious cause of potential damages to the cylinder lining.

The present invention provides a device solving the above-outlined problems. Characteristic features of the invention are that holes 9 (only one shown) extend from the top face 7 of a piston ring 6 to the bottom face 8 thereof for passage-through of a smaller amount of combustion gases from the engine combustion chamber. As illustrated in Fig. 4 the bottom face 8 of the piston ring 6 is pressed during operation against the associated piston 10 while a smaller gap 11 exists between the piston 10 and the top face 7 of the ring 6. For outlet of said amount of combustion gases into the cylinder below the piston ring 6 a channel 12 therefore is provided between each hole opening on the bottom face 8 of the ring 6 and the peripheral edge face 13 thereof, which latter face forms the wear face sliding against the engine cylinder bore.

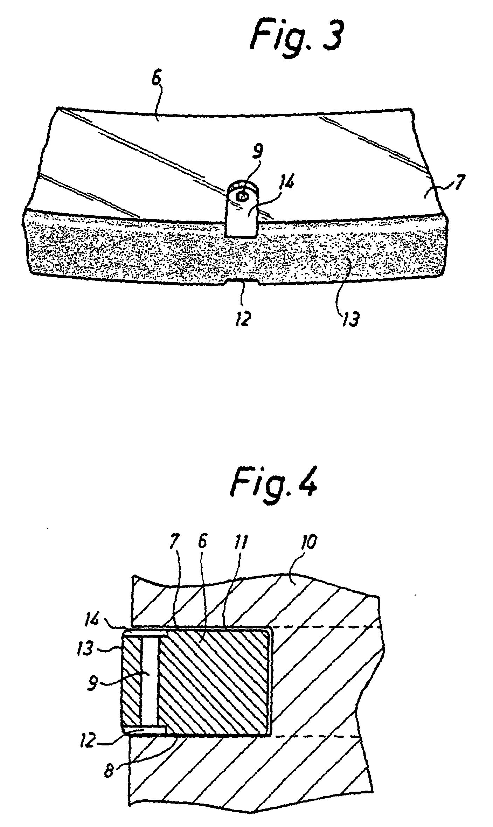

As appears from Figs 3 and 4 a channel 14 extends also from each hole opening on the top face 7 of the ring 6 to the peripheral edge face 13 of the ring, with the exception of the gap 11, in order to facilitate inlet of combustion gases into the holes 9. Like the above slits 4, said holes preferably are equidistantly spaced around the ring 6.

Owing to the provision of these holes 9 the load on the uppermost one of a series of rings 6 fitted on a piston is reduced as a result of a calculated passage-through of a smaller amount of combustion gases, without significant deterioration of the strength and durability of the ring 6 and without any significant effect on the wear face 13 of the ring 6.

The invention is not limited to the features shown and described but could be varied in many ways within the scope of the appended claims. As illustrated in the drawing the holes 9 may extend between the upper face 7 and the bottom face 8 perpendicularly to the planes of the faces but they could equally well extend obliquely between said planes. It is equally possible to position the holes 9 further inwards, i.e. somewhat closer to the inner peripheral edge of the ring 6 than illustrated in the drawing.

## Claims

1. A piston ring (6) for being fitted on pistons of internal combustion engines, having a top face (7), a bottom face (8), and a peripheral edge face (13), the latter forming a wear face slidable against an engine cylinder bore, **characterized in that** holes (9) extend from the top face (7) to the bottom face (8) of the piston ring (6) for passage-through of a smaller amount of combustion gases from the engine combustion chamber, and **in that** intermediate each hole opening on the bottom face (8) of the ring (6) and the peripheral edge face (13) of the latter extends a channel (12) for outlet of said amount of combustion gases into the cylinder bore below the piston ring (6).

2. A ring as claimed in claim (1), wherein the top face (7) and the bottom face (8) of the piston ring (6) extend in parallel, **characterized in that** the holes (9) extend between the top and the bottom faces (7) and (8), perpendicularly to the planes thereof.

3. A ring time as claimed in claim (1), **characterized in that** the holes (9) extend obliquely between the planes of the top and the bottom faces (7) and (8).

4. A ring as claimed in claim 1, **characterized in that** a channel (14) extends between each hole opening in the top face (7) of the ring (6) and the peripheral edge face (13) thereof, to facilitate inlet of combustion gases into the holes (9).

## Patentansprüche

1. Kolbenring (6) zur Montage auf Kolben von Verbrennungsmaschinen, der eine obere Fläche (7), eine untere Fläche (8) und eine Umfangskantenfläche (13) aufweist, wobei letztere eine an einer Motorzylinderbohrung gleitende Verschleißfläche bildet, **dadurch gekennzeichnet, daß** sich für den Durchtritt einer kleineren Menge an Abgasen aus dem Motorverbrennungsraum Löcher (9) von der oberen Fläche (7) zu der unteren Fläche (8) des Kolbenrings (6) erstrecken und daß sich zwischen jedem in der unteren Fläche (8) des Rings (6) öffnenden Loch und der Umfangskantenfläche (13) des Rings ein Kanal (12) zum Ablassen der Menge an Abgasen in die Zylinderbohrung unter dem Kolbenring (6) erstreckt.

2. Ring nach Anspruch 1, wobei sich die obere Fläche (7) und die untere Fläche (8) des Kolbenrings (6) parallel erstrecken, **dadurch gekennzeichnet, daß** sich die Löcher (9) zwischen der oberen und unteren Fläche (7) und (8) senkrecht zu deren Ebenen erstrecken.

3. Ring nach Anspruch 1, **dadurch gekennzeichnet, daß** sich die Löcher (9) schräg zwischen den Ebenen der oberen und der unteren Fläche (7) und (8) erstrecken.

4. Ring nach Anspruch 1, **dadurch gekennzeichnet, daß** sich zur Erleichterung des Einlasses von Abgasen in die Löcher (9) zwischen jedem in der oberen Fläche (7) des Rings (6) öffnenden Loch und seiner Umfangskantenfläche (13) ein Kanal (14) erstreckt.

## Revendications

1. Segment de piston (6) destiné à venir se disposer sur des pistons de moteurs à combustion interne, possédant une face supérieure (7), une face inférieure (8) et une face marginale périphérique (13), cette dernière formant une face d'usure apte à coulisser contre un alésage de cylindre du moteur, **caractérisé en ce que** des trous (9) s'étendent depuis la face supérieure (7) jusqu'à la face inférieure (8) du segment de piston (6) pour la traversée d'une petite quantité de gaz de combustion depuis la chambre d'explosion du moteur, et **en ce que**, entre chaque ouverture de trou sur la face inférieure (8) du segment silice et la face marginale périphérique (13) de ce dernier, s'étend un canal (12) pour l'évacuation de ladite quantité de gaz de combustion dans l'alésage de cylindre en dessous du segment de piston (6).

2. Segment selon la revendication 1, dans lequel la face supérieure (7) et la face inférieure (8) du segment de piston (6) s'étendent en parallèle, **caractérisé en ce que** les trous (9) s'étendent entre les faces supérieure et inférieure (7) et (8), perpendiculairement au plan de ces dernières.

3. Segment selon la revendication 1, **caractérisé en ce que** les trous (9) s'étendent en oblique entre les plans des faces supérieure et inférieure (7) et (8).

4. Segment selon la revendication 1, **caractérisé en ce qu'**un canal (14) s'étend entre chaque ouverture de trou dans la face supérieure (7) du segment (6) et sa face marginale périphérique (13) pour faciliter l'entrée des gaz de combustion dans les trous (9).
